# EUROPÄISCHE PATENTANMELDUNG

(11) **EP 2 397 454 A1**
(43) Veröffentlichungstag der Anmeldung: **21.12.2011**
(21) Anmeldenummer: 11007440.8
(22) Anmeldetag: 08.02.2010
(51) Int. Cl.: C04B 41/65

(54) **Photokatalytisch aktivierte Bauteiloberfläche**

(30) Priorität: 24.03.2009 DE 102009014602
(62) Teilanmeldung aus: 10152879.2
(71) Anmelder: Dyckerhoff AG, 65203 Wiesbaden (DE)
(72) Erfinder: Droll, Klaus, Dr., 55126 Mainz (DE)
(74) Vertreter: Solf, Alexander

(57) **Zusammenfassung**

Die Anmeldung betrifft ein Bauteil (2) mit poröser, insbesondere kapillarporöser, mineralischer Bindemittelmatrix, wie insbesondere ein mineralisches Bauteil, z.B. ein Betonbauteil, eine Mörtelbeschichtung oder Putzbeschichtung oder ein Gipsbauteil, hergestellt aus wässrigen Mischungen aus mindestens einem mineralischen, anorganischen Bindemittel, wie Zement, Baukalk, Gips und/oder Anhydrit, und in der Regel mindestens einem Zuschlagstoff und/oder mindestens einem Zusatzstoff und/oder mindestens einem Zusatzmittel, wobei mindestens eine Bauteiloberfläche diskrete, die Bauteiloberfläche nicht vollflächig bedeckende auf die erhärtete Bauteiloberfläche nachträglich aufgebrachte Fleckenbereiche aus Bindemittelstein (7) aufweist, in dem photokatalytisch aktive Teilchen (4) fest gehaltert angeordnet sind und für Licht und/oder Gase frei zugängliche Teilchenoberflächenbereiche aufweisen.

## Beschreibung

Die Erfindung betrifft ein an mindestens einer Oberfläche photokatalytisch aktiviertes, insbesondere mineralisches Bauteil, das eine poröse, insbesondere mineralische Bindemittelmatrix aufweist. Die Bauteiloberflächen können unbeschichtet und z.B. eine Sichtbetonoberfläche sein oder eine erhärtete bzw. abgebundene Beschichtung, z.B. einen Putz oder Mörtel mit einer porösen z.B. mit mineralischen Bindemitteln gebundene Matrix aufweisen. Porös im Sinne der Erfindung meint, dass z.B. aufgrund von Erhärtungsreaktionen von mineralischen Bindemitteln Poren und Kapillaren in der Matrix vorhanden sind.

Bauteile auf Basis mineralisch gebundener, kristalliner Matrix, mit denen sich die Erfindung insbesondere befasst, sind Baukörper, die so verwendet werden sollen, dass sie im eingebauten Zustand z.B. in einem Gebäude zumindest eine Licht empfangende Oberfläche bilden und hergestellt sind aus einer Mischung aus mindestens einem mineralischen, anorganischen Bindemittel wie z.B. Zement, Baukalk und/oder Gips oder Anhydrit, und in der Regel Zuschlagstoffen wie z.B. Sanden, Kiesen und Splitten und/oder Zusatzstoffen wie z.B. Flugaschen, Steinmehlen und/oder Zusatzmitteln wie z.B. Fließmitteln, Stabilisatoren, Hydrophobierungsmitteln. Diese Bauteile sind z.B. in Schalungen oder Formen hergestellte Betonfertigteile oder in Schalungen erzeugte Ortbetonbauteile. Gleichermaßen sind diese Bauteile z.B. Betonwaren, das sind meist Betonerzeugnisse wie Betonpflastersteine, Betonrohre, Gehweg- und Belagplatten, Bord- und Randsteine, Bahnsteigkanten oder dgl. Zudem sind diese Bauteile z.B. Betonwerksteine oder Estrichböden und Terrazzoböden oder Mörtel oder Putze auf Baukörperoberflächen. Die Herstellung und Zusammensetzung dieser Bauteile werden z.B. im Handbuch "Betonfertigteile - Betonwerkstein - Terrazzo", Verlag Bau + Technik GmbH, Düsseldorf, 1999, insbesondere in den Kapiteln 5, 6 und 7 beschrieben. Die Erfindung betrifft aber auch mit Gips oder Anhydrit gebundene Bauteile, insbesondere mit Gips gebundene Fertigprodukte wie Gipskartonplatten, Gipswände, Anhydritestriche u. dgl.

Es ist bekannt, Oberflächen von erhärteten Bauteilen mit photokatalytisch wirkenden Nanopartikeln wie TiO₂-Partikeln zu beschichten, wodurch eine Selbstreinigung der Oberfläche erzielt wird. Neben dieser selbstreinigenden Wirkung können mit einem Photokatalysatorfilm beschichtete Oberflächen aktiv zur Reinigung der sie umgebenden Luft beitragen, indem z.B. toxische Gase wie NO und NOₓ photokatalytisch zu NO₂ oxidiert werden, woraus in wässrigem Milieu ungiftige Nitrat-lonen resultieren. Als Beschichtungen sind organisch gebundene Filme, Putze oder Mörtel verwendet worden, die nachträglich nach der Erstellung eines Bauwerks oder nach dem Erhärten der Bauteile z.B. mit wässrigen Suspensionen auf die Bauteile aufgebracht werden (z.B. WO 01/00541 A1, EP 784 034 A1, EP 614 682 A1, DE 10 2005 057 770 A1, US 2 007/0027015 A1, EP 1 020 564 A1, US 2 006/0147756 A1, DE 10 2005 057 747 A1). Dabei werden auch Premixe aus einem hydraulischen Bindemittel und photokatalytisch wirkenden Partikeln zur Herstellung wässriger Mischungen angewendet (EP 1 564 194 A2) und die wässrigen Mischungen auf die Oberflächen aufgespritzt oder aufgesprüht (EP 1 020 564 A1).

Alle diese verschiedenartigen Beschichtungen haben generell den Nachteil, dass die außer den photokatalytisch wirkenden Nanoteilchen anderen vorhandenen Nebenbestandteile die Effektivität der Photokatalyse beeinträchtigen können und/oder mengenmäßig zu viele der teuren photokatalytischen Nanoteilchen in unwirksamem Zustand enthalten und/oder sich die Beschichtung vom Untergrund durch Witterungseinflüsse löst und/oder die Beschichtung durch Umwelteinflüsse zerstört wird.

Eine andere, relativ teure Methode ist, die photokatalytisch wirkenden Nanoteilchen der Grundmischung der Bauteile zuzumischen. Dabei ist zwar eine sehr große Menge an Nanoteilchen erforderlich, die Einbindung der Nanoteilchen in die Matrix ist aber sehr viel fester als in Beschichtungen, weshalb deren Wirkung dauerhafter ist (z.B. EP 885 857 A1, IT 1 286 492 A1).

Aufgabe der Erfindung ist, insbesondere geformte Bauteile der oben beschriebenen Art auf einfache Weise mit geringen Mengen an photokatalytisch aktiven Teilchen auszurüsten und dabei dennoch eine sehr effektive, dauerhafte photokatalytische Wirkung zu erzielen.

Diese Aufgabe wird durch die Merkmale des Anspruchs 1 gelöst. Vorteilhafte Weiterbildungen der Erfindung werden in den abhängigen Unteransprüchen angegeben.

Zur Ertüchtigung der erfindungsgemäßen Bauteile wird zunächst Wasser auf die Oberfläche des mineralischen Bauteils gebracht. Die Matrix des Bauteils saugt das Wasser im Wesentlichen kapillar auf bis eine z.B. vorübergehende gewisse Sättigung bzw. Ausfüllung der Poren und Kapillaren erreicht ist. Danach bildet sich ein dünner Wasserfilm auf der Oberfläche des Bauteils. Dieser Wasserfilm wird erfindungsgemäß angestrebt und erzeugt; er sollte etwa eine Dicke zwischen 0,1 und 5 mm, insbesondere zwischen 0,1 und 1 mm aufweisen und auch bei schrägen oder vertikalen Flächen an der Oberfläche haften bleiben. Unmittelbar nach Auftragen eines Wasserfilms z.B. innerhalb weniger Minuten bevor der Wasserfilm verdunstet ist oder vom Bauteil aufgesaugt worden ist, wird auf den Wasserfilm eine trockene Mischung aus mindestens einem mineralischen, feinteiligen, anorganischen Bindemittel und photokatalytisch aktiven Teilchen aufgebracht, z.B. direkt aufgedüst, aufgestreut, aufgeblasen oder indirekt, z.B. mit einer Walze, aufgewalzt.

Man kann die Teilchensorten auch nacheinander aufbringen und die wässrige Oberfläche z.B. zunächst mit den trockenen Bindemittelteilchen und anschließend mit trockenen photokatalytisch aktiven Teilchen belegen oder umgekehrt.

Zum Zeitpunkt des Auftragens der trockenen Teilchen befindet sich soviel Wasser auf der Oberfläche, dass die aufgebrachten Teilchen zunächst adhäsiv festgehalten werden. Anschließend bilden sich erste chemische Reaktionsphasen aus Lösungen, z.B. Ettringit aus Zementmineralen oder erste Gipsphasen im Falle von Stuckgips oder Anhydrit als Bindemittel des oder der Bindemittel(s) mit dem Wasser zumindest an der Oberfläche der Bindemittelteilchen, die ein erstes Anbacken bzw. Haften der Bindemittelteilchen an der Oberfläche des Bauteils und eine erste Bindung der photokatalytisch aktiven Teilchen, die chemisch nicht mit dem Wasser und den Bindemittelteilchen reagieren, an die Bindemittelteilchen bewirken, wobei aber wohl auch noch kapillare Kräfte der Bauteilmatrix das Haften der Teilchen unterstützen. Die ersten Reaktionsphasen der Bindemittel gehen in kristalline Hydratphasen über, deren Kristalle sich in der Oberflächenmatrix des Bauteils verkrallen und die photokatalytisch aktiven Teilchen derart umgreifen bzw. einbetten, dass sie fest in der Kristallmatrix gehaltert werden.

Die Bildung der Reaktionshydratphasen der Bindemittel verbraucht einen erheblichen Anteil des aufgebrachten Wasserreservoirs im Oberflächenbereich des Bauteils, woraus eine Verfestigung des Teilchenauftrags und auch zumindest eine Teilentwässerung der Oberflächenbereiche des Bauteils resultieren. Zur Unterstützung und gegebenenfalls Beschleunigung der Bildung der Hydratphasen der Bindemittel kann zweckmäßigerweise nach dem Aufbringen der trockenen Teilchen nachträglich noch Wasser auf die Oberfläche aufgebracht werden, insbesondere dann, wenn das Oberflächenwasser zu schnell verdunstet oder vom Bauteil aufgesaugt worden ist.

Die Wassermenge, die auf die Oberfläche des Bauteils aufzubringen ist, ist empirisch zu ermitteln. Sie ist insbesondere abhängig von der Kapillar- und Porenstruktur der Matrix des Bauteils und vom Wasserbedarf der in Mehl- bzw. Pulverform aufgetragenen trockenen Bindemittelteilchen und der trockenen photokatalytisch aktiven Partikel.

Es werden an sich bekannte photokatalytisch aktive Teilchen, z.B. TiO₂-Teilchen, mit Teilchengrößen im Nanobereich, z.B. zwischen 1 und 1000 nm, und/oder Mikrobereich, z.B. zwischen 1 und 50 µm, auf eine im eingebauten Zustand Licht empfangende Oberfläche eines erhärteten mineralisch abgebundenen Bauteils mit z.B. einer Matrix aus Zement übertragen bzw. aufgebracht. Erhärtet meint, dass das Bauteil sich nicht mehr im Frischzustand bzw. im sogenannten grünen oder jungen Zustand, sondern im Festzustand (im Folgenden auch Festbauteil genannt) befindet, d.h. die mineralischen Bindemittel haben ihre vollständige kristalline Feststruktur entwickelt, wie das z.B. beim Festbeton oder bei erhärteten Gipsbauteilen der Fall ist.

Es ist überraschend, dass die photokatalytisch aktiven Teilchen fest und dauerhaft ohne zusätzliche Haftvermittler oder Haftmittel an der Oberfläche eines Bauteils angeordnet bzw. eingebunden werden können und auch nach dem Erhärten des Bindemittels an der Oberfläche des Bauteils festsitzen, denn die Teilchen reagieren chemisch nicht mit Bestandteilen der Bindemittel und es musste erwartet werden, dass zu viele Teilchen lose an der Oberfläche liegen bleiben und leicht entfernbar sind, z.B. abfallen oder absanden. Offenbar werden die Teilchen zunächst durch Kapillarkräfte von Kapillaren an der Festbauteiloberfläche über adhäsive Wasserbrücken festgehalten. Die Kapillaren entstehen bekanntlich bei der Erhärtung der Bindemittel durch bei der Reaktion nicht verbrauchtes Überschusswasser in den Frischbauteilmischungen. Durch sie kann das Wasser bei und nach der Erhärtung der Bindemittel von der Oberfläche des Bauteils in das Innere des Bauteils wandern und dort bei der verfestigenden Bindemittel-Kristallbildung (z.B. Calziumsilikathydrat- oder Calziumaluminathydrat-Phasenbildung und/oder Gipsdihydratbildung) verbraucht wird. Anschließend werden die photokatalytisch wirkenden Teilchen in die ersten Hydratphasen des Bindemittels des Auftrags und danach in die Kristallnadel- bzw. Kristallplättchenstruktur der erhärtenden Bindemittel z. B. des erhärtenden Zements, dem sogenannten Zementstein, eingefangen bzw. eingebettet und dort mechanisch festgehalten, wobei für Licht und/oder Gase wie Luft frei zugängliche Teilchenoberflächenbereiche der photokatalytisch aktiven Teilchen verbleiben.

Als photokatalytisch aktive Teilchen bzw. Partikel werden z.B. TiO₂ und/oder ZnO und/oder andere bekannte photokatalytisch aktive Partikel, insbesondere mineralmodifizierte photokatalytisch aktive Partikel mit einem breiteren Absorptionspektrum z.B. wie in DE 10 2005 057 771 A1, DE 10 2005 057 747 A1 oder WO 01/00541 A1 beschrieben, die durch UV-Strahlung und/oder sichtbares Licht photokatalytisch angeregt werden können, verwendet. Die photokatalytisch aktiven Teilchen werden z.B. in Form von trockenen Pulvern mit Teilchenkorngrößen z.B. von 5 nm bis 50 µm, insbesondere von 20 bis 100 nm als sogenannte Nanoteilchen und/oder als Mikroteilchen mit Korngrößen z.B. von 0,1 bis 50 µm, insbesondere von 0,1 bis 1 µm verwendet.

Die photokatalytisch aktiven Teilchen können z.B. auch in Form von wässrigen Pulver-Suspensionströpfchen mit Tröpfchendurchmessern z.B. von 0,1 bis 1000 µm, insbesondere von 1 bis 50 µm aufgebracht werden, wenn die Bindemittelteilchen und die photokatalytisch aktiven Teilchen getrennt aufgebracht werden auf den Wasserfilm der angefeuchteten Bauteiloberfläche.

Die photokatalytisch aktiven Teilchen sind auf eine Oberfläche verteilt angeordnet mit z.B. 0,1 bis 100, vorzugsweise 0,1 bis 50, insbesondere mit 2 bis 10 Flächen-%, d.h., dass die Oberfläche mit entsprechenden Mengen der Teilchen belegt ist. Die Belegung kann homogen flächenverteilt oder inhomogen z.B. nach einem oder mehreren Mustern oder als Computerpunktverteilung völlig unregelmäßig flächenverteilt werden, z.B. wenn die Bindemittelteilchen und die photokatalytisch aktiven Partikel getrennt aufgebracht werden. Bei inhomogener Flächenverteilung erfolgt z.B. eine Flächenbelegung der Teilchenmischung aus Bindemittelteilchen und photokatalytisch aktiven Partikeln von 0,1 bis 100, vorzugsweise 0,1 bis 50 Flächen-%, insbesondere von 2 bis 10 Flächen-%. Die Gesamtmenge der Mischung liegt vorzugsweise unter 100 g/m², insbesondere unter 20 g/m² und damit weit unter den Mengen, die mit nassen Beschichtungen wie Putzen oder Mörteln erforderlich sind und z.B. über mindestens 30 bis 60 g/m² betragen, um den gewünschten Halt auf der Oberfläche des Bauteils und gleiche Wirkungen zu gewährleisten.

Das Aufbringen der photokatalytisch aktiven Teilchen und der Bindemittelteilchen erfolgt unmittelbar oder mittelbar auf die mit einem Wasserfilm belegte Oberfläche des Bauteils. Unmittelbar erfolgt die Aufbringung z.B. durch Aufstäuben, Aufstreuen, Aufspritzen oder Aufdüsen auf die wasserhaltige Oberfläche des Bauteils.

Zur mittelbaren Übertragung werden Trägervorrichtungen, z.B. Folien oder Walzen verwendet, auf denen vorher die Teilchen angeordnet worden sind und durch Auflegen und anschließendes Abziehen der Folien oder durch Aufwalzen mit der Walze auf die angefeuchtete, einen Wasserfilm aufweisende Bauteiloberfläche übertragen werden.

Die photokatalytisch aktiven Teilchen werden mit einem Bindemittelpulver bzw. Bindemittelmehl, z.B. aus Zement, Baukalk und/oder Gips oder Anhydrit vor dem Aufbringen trocken gemischt. Die Bindemittelmehlteilchen reagieren dann nach dem Aufbringen der trockenen Bindemittel-aktive Teilchen-Mischung auf die nasse Oberfläche mit dem vorhandenen Wasser an der Oberfläche des Bauteils und bilden erste Reaktionsphasen, die die photokatalytisch aktiven Teilchen zunächst oberflächlich beim Ansteifen und Erstarren einbinden und beim anschließenden Erhärten mit den Erhärtungskristallphasen dieses Bindemittels die Teilchen in der Kristallmatrix dieses Bindemittels fest haltern.

Zweckmäßigerweise weisen verwendbare Mischungen aus photokatalytisch aktiven Teilchen und Bindemittelpulver, z.B. aus Zement, Gewichtsmengenverhältnisse von 90:10 bis 10:90, insbesondere von 80:20 bis 20:80 auf. Die Bindemittel können mit Korngrößenbereichen zwischen 10 nm und 100 µm eingesetzt werden. Vorzugsweise werden dabei Zemente mit Korngrößenbereichen zwischen 0,1 µm und 50 µm und/oder Feinstzemente mit Korngrößenbereichen zwischen 0,1 und 10 µm verwendet. Insbesondere wird ein Bindemittel verwendet, das auch für die Herstellung des Bauteils verwendet worden ist und z.B. ein Zement ist.

Am erfindungsgemäßen Bauteil kann der Fachmann ohne weiteres durch eine Analyse der Oberfläche des Bauteils erkennen, wie die photokatalytisch aktiven Teilchen aufgebracht wurden. Z.B. erkennt man das daran, dass die Teilchen in einer zusätzlichen, gesonderten, gegenüber der Bauteiloberfläche durch Grenzflächen abgegrenzten kristallinen Bindemittelmatrix z.B. in Zementstein oder Gipsdihydratstein fest eingebunden sind und nicht ungebunden auf der Oberfläche liegen. Insbesondere aber ist ein erfindungsgemäßes Bauteil daran erkennbar, dass der Auftrag bzw. die Verteilung des Auftrags auf der Oberfläche fleckenartig ausgebildet ist, mit voneinander auf Abstand sich befindenden Zonen aus Bindemittelsteinmaterial, in welches die photokatalytisch aktiven Teilchen eingebettet sind.

Bei der Herstellung von Beschichtungen von Bauteilen nach dem Stand der Technik, bei denen die photokatalytisch aktiven Teilchen einer wässrigen Bindemittelmischung zugemischt werden, befinden sich im frischen oder erhärteten Zustand der Beschichtung zwar auch Teilchen an der Oberfläche der Beschichtung; diese Teilchen sind aber weniger wirksam, weil ihre Oberfläche meist mit Fremdstoffen, z.B. Porenlösungsresten, das sind z.B. Calciumhydroxid- oder -sulfatfilme, belegt ist. Bei gleicher Bauteiloberflächenmengenbelegung mit aktiven Teilchen führt dies nachweislich zu einer geringeren Aktivität der Oberfläche.

Durch die Erfindung werden ungewöhnlich viele Vorteile angehäuft. Es werden sehr viel geringere Mengen an teuren photokatalytisch aktiven Teilchen bei gleicher photokatalytischer Wirkung benötigt. Die verfügbare Menge der Teilchen an der Oberfläche ist auf einfache Weise vorher bestimmbar durch eine einfache Dosierung. Die Belegung der Oberfläche bezüglich der Menge und/oder der Art der Teilchen und/oder der Körnungen kann z.B. zonal z.B. mit Schablonen erfolgen. Verwendbar sind trockene handelsübliche Pulver. Ein Mischproblem tritt bei den trockenen Pulvern nicht auf wie das bei wasserhaltigen Frisch-Bindemittelmischungen der Fall ist, denen insbesondere die Nanoteilchen für eine homogene Dispergierung mit erheblichem Aufwand zugemischt werden müssen und bei denen eine homogene Verteilung der Nanoteilchen in der Mischung sehr viel schwieriger ist. Nach der Erfindung lassen sich Nanoteilchen ebenso leicht aufbringen wie Mikroteilchen oder Mischungen daraus.

In jedem Fall kann aber die photokatalytische Effektivität der aktiven Teilchen erheblich gesteigert werden, weil sie an der Oberfläche des Bauteils freier zugänglich sind als bei Bauteilen, die die Teilchen eingemischt enthalten bei gleicher Menge an der Oberfläche der Bauteile.

Ein weiterer wesentlicher Vorteil der Erfindung ist, dass das Bauteil durch den Zusatz der photokatalytisch aktiven Teilchen keine Festigkeitseinbuße erfährt. Bei Bauteilen, denen die photokatalytisch aktiven Teilchen zugemischt worden sind, schwächen diese Teilchen die Festigkeit, weil diese inerten Partikel nicht mit Bindemittelbestandteilen reagieren und somit zur Festigkeit keinen Beitrag leisten.

Zur Erfindung gehören auch poröse Bauteile mit nichtmineralischer Bindung und/oder nichtmineralischer Matrix, die erfindungsgemäß oberflächlich aktiviert sind und die es ermöglichen, einen Wasserfilm auf der zu aktivierenden Oberfläche zu bilden und auf deren Oberfläche das erhärtete mineralische Bindemittel haften kann.

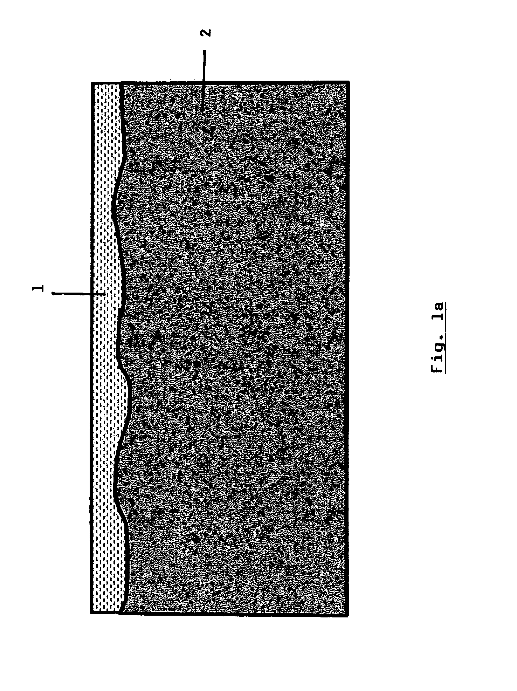

Anhand der Zeichnung wird das erfindungsgemäße Verfahren beispielhaft näher erläutert. Es zeigen die Fig. 1a bis 1e schematisch, wie das erfindungsgemäße Bauteil herstellbar ist.

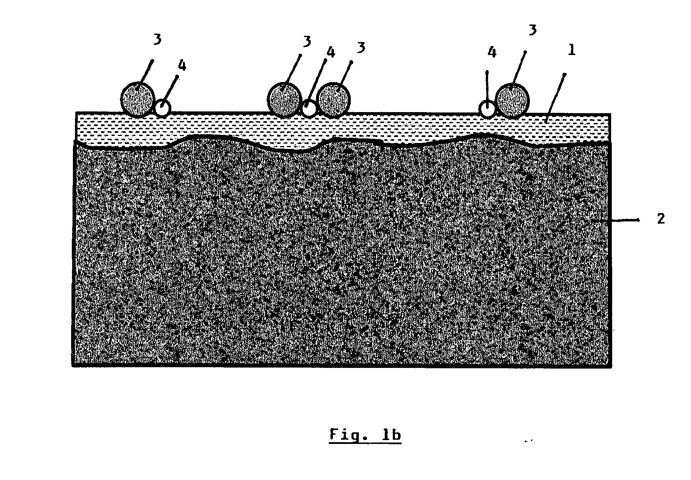

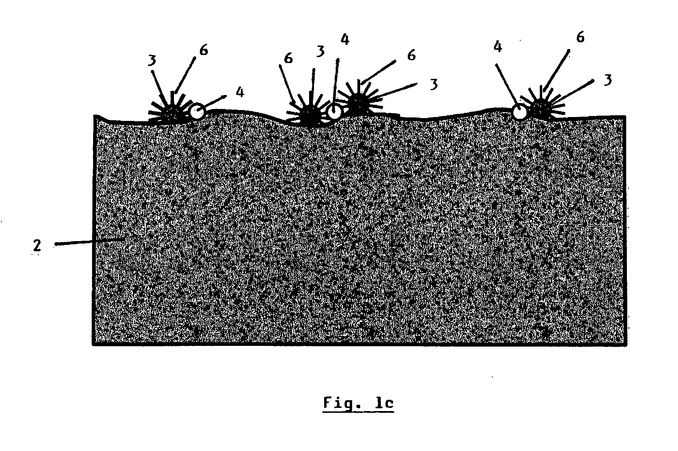

Fig. 1a zeigt einen Wasserfilm 1 auf einem Bauteil 2, z.B. einem Betonbauteil. Auf den und zumindest teilweise in den Wasserfilm 1 werden als Gemenge Bindemittelmehlteilchen 3, z.B. Zementteilchen, und photokatalytisch wirkende Mehlpartikel 4, z.B. TiO₂-Partikel, aufgebracht (Fig. 1b). Die Bindemittelmehlteilchen 3 beginnen in den ersten Minuten nach dem Auftrag mit dem Wasser zu reagieren und bilden erste wasserhaltige Reaktionsphasen 6 zumindest an ihrer Kornoberfläche bzw. Teilchenoberfläche und kitten die photokatalytisch aktiven Teilchen 4 an die Bindemittelteilchen 3 sowie an die Bauteiloberfläche, wobei Wasser chemisch verbraucht wird, verdunstet und/oder tiefer in die Matrix des Bauteils 2 eindringt (Fig. 1c). Danach gehen die ersten Hydratkristalle 6 in die Erhärtungshydratphasen über, wobei die Bindemittelminerale und ersten Reaktionsphasen der Bindemittelteilchen 4 aufgebraucht werden bzw. chemisch umgewandelt werden in die kristallinen Erhärtungshydratphasen, die Bindemittelsteinmaterial bilden. Diese Hydratkristallmatrix umfängt die photokatalytisch aktiven Teilchen 4, insbesondere nur teilweise und die Kristalle der Hydratkristallmatrix verbinden sich bzw. verankern sich mit bzw. in der Matrix des Oberflächenbereichs des Bauteils 2 bzw. sie wachsen auf die Oberflächenmatrix des Bauteils auf und/oder in die Oberflächenmatrix des Bauteils 2 ein.

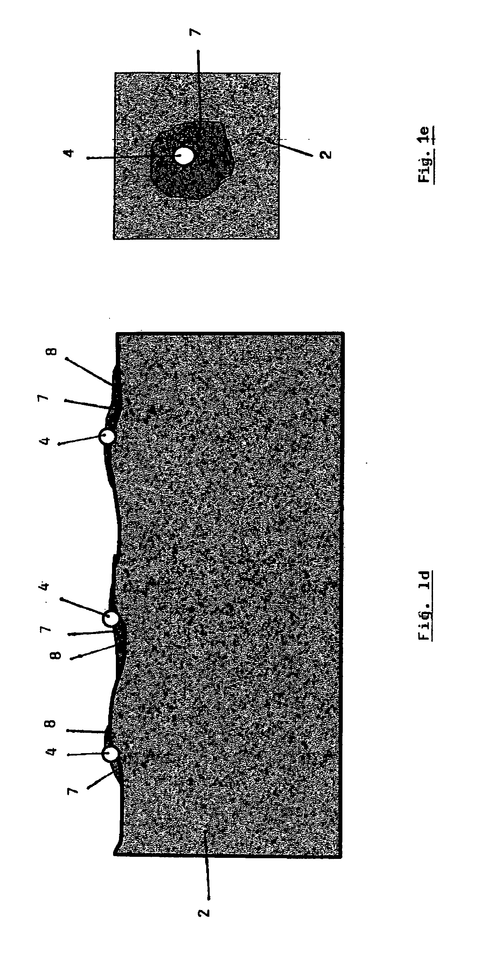

Im ausgehärteten Zustand des Bindemittels sieht der Auftrag und die Haftung bzw. Fixierung der photokatalytisch aktiven Teilchen 4 in etwa so fleckenartig aus wie aus Fig. 1d in einer Seitenansicht und in Fig. 1e in einer Draufsicht schematisch erkennbar ist. Die photokatalytisch aktiven Teilchen 4 sind teilbereichsweise umgeben von erhärtetem Bindemittelsteinmaterial, z.B. Zementsteinmaterial 7, z.B. einer Dicke zwischen 1 und 1000 µm und einem Fleckendurchmesser zwischen 10 und 5000 µm, der zur Bauteilmatrix eine physikalische Grenzschicht bzw. Grenzphase 8 zwischen der Bauteilmatrix an der Oberfläche und dem z.B. Zementsteinmaterial 7 aus dem Bindemittel des Auftrags bildet. Die photokatalytisch aktiven Teilchen 4 ragen mit freien Oberflächenbereichen aus dem z.B. Zementsteinmaterial 7 heraus, die die Aktivität entsprechend gewährleisten.

## Patentansprüche

1. Bauteil (2) mit poröser, insbesondere kapillarporöser, mineralischer Bindemittelmatrix, wie insbesondere ein mineralisches Bauteil, z.B. ein Betonbauteil, eine Mörtelbeschichtung oder Putzbeschichtung oder ein Gipsbauteil, hergestellt aus wässrigen Mischungen aus mindestens einem mineralischen, anorganischen Bindemittel, wie Zement, Baukalk, Gips und/oder Anhydrit, und in der Regel mindestens einem Zuschlagstoff und/oder mindestens einem Zusatzstoff und/oder mindestens einem Zusatzmittel,
**dadurch gekennzeichnet, dass**
mindestens eine Bauteiloberfläche diskrete, die Bauteiloberfläche nicht vollflächig bedeckende auf die erhärtete Bauteiloberfläche nachträglich aufgebrachte Fleckenbereiche aus Bindemittelstein (7) aufweist, in dem photokatalytisch aktive Teilchen (4) fest gehaltert angeordnet sind und für Licht und/oder Gase frei zugängliche Teilchenoberflächenbereiche aufweisen.

2. Bauteil nach Anspruch 1,
**dadurch gekennzeichnet, dass**
die photokatalytisch aktiven Teilchen Teilchengrößen im Nanobereich zwischen 1 und 1000 nm und/oder im Mikrobereich zwischen 1 und 50 µm aufweisen.

3. Bauteil nach Anspruch 1 und/oder 2,
**dadurch gekennzeichnet, dass**
die photokatalytisch aktiven Teilchen mit Flächen-% von 0,1 bis 100, vorzugsweise von 0,1 bis 50, insbesondere von 2 bis 10 Flächen-% vorhanden sind.

4. Verfahren nach einem oder mehreren der Ansprüche 1 bis 3,
**dadurch gekennzeichnet, dass**
die photokatalytisch aktiven Teilchen Teilchengrößen im Nanobereich zwischen 1 und 1000 nm und/oder im Mikrobereich zwischen 1 und 50 µm aufweisen.
